# EUROPEAN PATENT SPECIFICATION

(11) **EP 0 743 585 B1**
(45) Date of publication and mention of the grant of the patent: **14.08.2002**
(21) Application number: 96107113.1
(22) Date of filing: 06.05.1996
(51) Int. Cl.: G05D 16/20, H02M 3/156, H01H 47/32

(54) **Control system for a linear solenoid valve**
Steuerungssystem für ein lineares Elektromagnetventil
Système de commande pour une vanne électromagnétique linéaire

(30) Priority: 19.05.1995 JP 12145495
(43) Date of publication of application: 20.11.1996
(73) Proprietor: AISIN AW CO., LTD., Anjo-shi Aichi-ken (JP)
(72) Inventor: Mikami, Kazuhiro, Anjo-shi, Aichi-ken, 444-11 (JP); Suzuki, Kenji, Anjo-shi, Aichi-ken, 444-11 (JP); Kusafuka, Muneo, Anjo-shi, Aichi-ken, 444-11 (JP); Sugiura, Masayuki, Anjo-shi, Aichi-ken, 444-11 (JP); Tsutsui, Hiroshi, Anjo-shi, Aichi-ken, 444-11 (JP)
(74) Representative: VOSSIUS & PARTNER

(56) References cited:
- WO-A-94/08386
- DE-A- 4 109 233
- DE-A- 4 140 586
- DE-A- 4 329 917
- FR-A- 2 648 584
- US-A- 4 898 361
- PATENT ABSTRACTS OF JAPAN vol. 95, no. 12, 26 December 1995 & JP-A-07 229576 (TOYOTA MOTOR CORP), 29 August 1995,

## Description

The present invention relates to a control system for a linear solenoid valve to be mounted on a vehicle.

The prior art of this field has already been proposed by JP-A-199757/1991 of the present Applicant.

According to this proposal, in order to obtain a target current value corresponding to a target oil pressure level, the current value in a linear solenoid valve is detected so that a feedback control for correcting the duty ratio of the power supply to the linear solenoid valve is executed on the basis of the detection result.

In this feedback control, there is usually adopted a setting method in which a control gain is set to a relatively small value to approach the target current value gradually so that the overshoot by the control may be avoided.

In the case of the linear solenoid valve to be mounted on the vehicle, however, the power source is a battery, which acts as a power supply for other devices, too. As a result, the voltage may fluctuate with the operations of the air conditioner or the wiper, for example.

According to the prior art described above, as the voltage fluctuates, the current value also fluctuates so that the feedback control is performed to attain the target current value. Because of a relatively small control gain, as described above, the fluctuation of the voltage cannot be quickly responded to thereby to cause a delay till the target current value is reached.

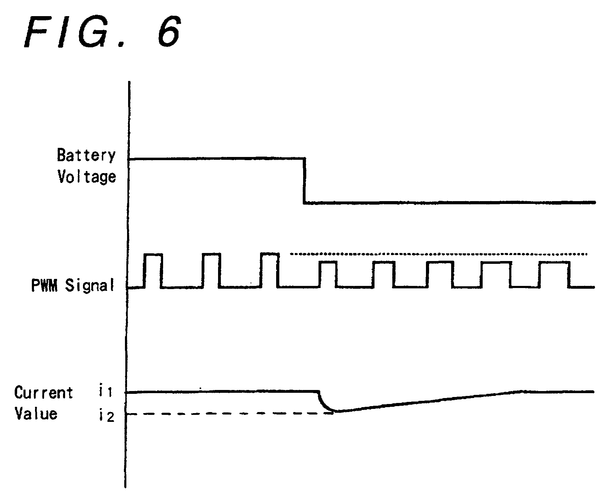

As a battery voltage V₁ drops to V₂, as illustrated in Fig. 6, the PWM signal is correspondingly subjected to the feedback control. Because of the relatively small control gain, as described above, the width D₁ of the PWM signal is narrow at the instant of the change in the battery voltage and gradually increases in the order of d₁ < d₂ < d₃ < d₄ < d₅. As a result, a current value i₁ once drops to a current value i₂ at the transition time and then gradually restores its original value.

In case, therefore, the linear solenoid valve is used for generating the line pressure of an automatic transmission, the line pressure may temporarily be over or below the target value.

JP-A-7-229 576 relates to a controller for current control type solenoid valve. On the basis of a change DELTAVB of the output voltage VB of a battery detected by an output voltage change detecting means 110, an integration constant KI reprinting a feedback gain and a proportional constant KP are changed. Therefore, an output such as feedback is changed according to the reduction of the output voltage VB of the battery even in sudden increase of the output current of the battery such as in turning on of a headlight and in energizing to a heater in a vehicle, so that a value detected by a current detecting means when a driving current of a current control type solenoid valve is cut off because of a change in the output voltage of the battery in the vehicle is previously determined as an offset value by an offset value determining means. An actual driving current calculating means finds an actual driving current by subtracting the off set value from a detection value detected by the current detecting means.

FR-A-2 648 584 relates to a system for regulating the mean current flowing through the load of an electric remote control device. It discloses a system for regulating the mean current flowing through a load, particularly an electric device controlling the phenomenon to be regulated, from initial variable control information, a DC voltage source being provided for supplying this load, comprising: a measuring device for permanently measuring the value of the variable information; a determination device for causing a mean theoretical current value to be applied to the load to correspond to each value of the information: a further measuring device for measuring the real DC voltage supplied by the supply voltage source; a computing device for computing, from the determined value of the mean theoretical current and the measured value of the DC supply voltage, a theoretical value of the cyclic ratio of a pre-determined fixed frequency square wave voltage signal; a generator for generating a fixed frequency square wave voltage signal having the computed cyclic ratio, this signal being applied to the load; another measuring device for measuring the real mean current flowing through the load; a comparator for comparing the values of the real and theoretical mean currents and generating an error signal; and a correcting device for correcting the theoretical value of the cyclic ratio as a function of the error signal.

The present invention has an object to solve the above-specified problems and to provide a control system for a linear solenoid valve, which is enabled to achieve a target oil pressure level, when a battery voltage fluctuates, by suppressing the fluctuation of a current value to be fed to the linear solenoid valve.

The object is achieved by the features of the claims.
Fig. 1 is a diagram of the entire system construction of a control system for a linear solenoid valve and shows an embodiment of the present invention;
Fig. 2 is a circuit diagram of a portion of a current control system of a linear solenoid and shows the embodiment of the present invention;
Fig. 3 is a block diagram of a control line of the linear solenoid valve and shows the embodiment of the present invention;
Fig. 4 is a control timing chart of a coil current value of the linear solenoid valve and shows the embodiment of the present invention;
Fig. 5 is a timing chart illustrating a relation between a PWM signal and the detection of a battery voltage and shows the embodiment of the present invention; and
Fig. 6 is a control timing chart of a coil current value of a linear solenoid valve of the prior art.

The present invention will be described in the following in connection with its embodiment with reference to the accompanying drawings.

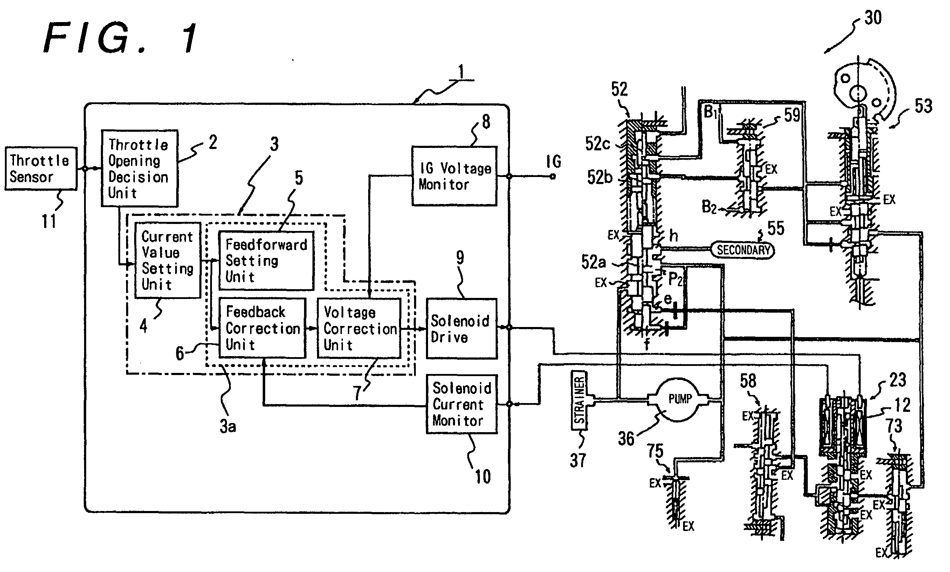

As shown in Fig. 1, an electronic control unit 1 receives a signal from a throttle sensor 11 so that the throttle opening is decided in a throttle opening decision unit 2, and the decision result is sent to a linear solenoid current value setting unit (as will be shortly called the "current value setting unit") 4. This current value setting unit 4 sets a linear solenoid current value for generating a line pressure of the A/T, as corresponding to a predetermined throttle opening. The current value, as set in the current value setting unit 4, is outputted to a feed forward setting unit 5 and a feedback correction unit 6 individually. The output of the feedback correction unit 6 is inputted to a voltage correction unit 7, the output of which is inputted to a solenoid driver 9 to control the current of the linear solenoid of a linear solenoid valve 23.

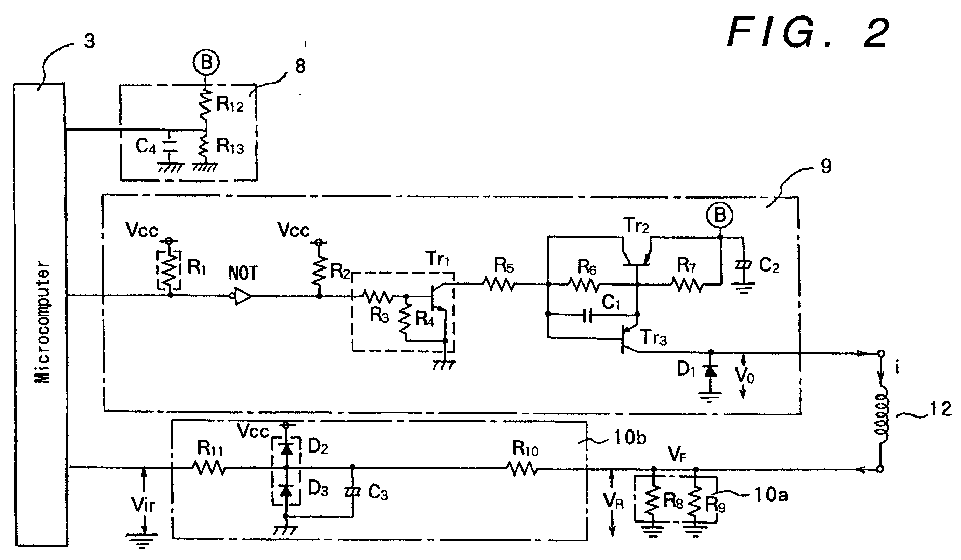

The current control system will be described in the following with reference to Figs. 1 and 2.

As shown the electronic control unit 1 receives the signal from the throttle sensor 11 to control the current to the linear solenoid 12 of the linear solenoid valve 23 so as to generate the oil pressure of the automatic transmission, as corresponding to the throttle opening.

Specifically, the electronic control unit 1 is provided with a microcomputer 3 including: the current value setting unit 4 for receiving the signal from the throttle opening decision unit 2; the feed forward setting unit 5 for outputting a PWM (Pulse Width Modulation) signal; the feedback correction unit 6; and the voltage correction unit 7. Further provided are: the solenoid driver 9 for driving the linear solenoid 12 of the linear solenoid valve 23; a current monitor unit (or current monitoring resistor) 10a; and a solenoid current monitor 10b.

In Fig. 2: reference characters R₁ to R₁₃ designate resistors; letters NOT a negative logic NOT circuit; characters Tᵣ₁ to Tᵣ₃ transistors; characters C₁ to C₄ capacitors; and characters D₁ to D₃ diodes.

Incidentally, the diode D₁ receives the surge inverse electromotive force by the linear solenoid 12 and is given a function to prevent the transistor Tᵣ₃ from being broken by the influence of the inverse electromotive force. Further provided is an IG voltage monitor 8 which divides the voltage of a battery B by the resistors R₁₂ and R₁₃ so that the divided voltage is inputted to the microcomputer 3.

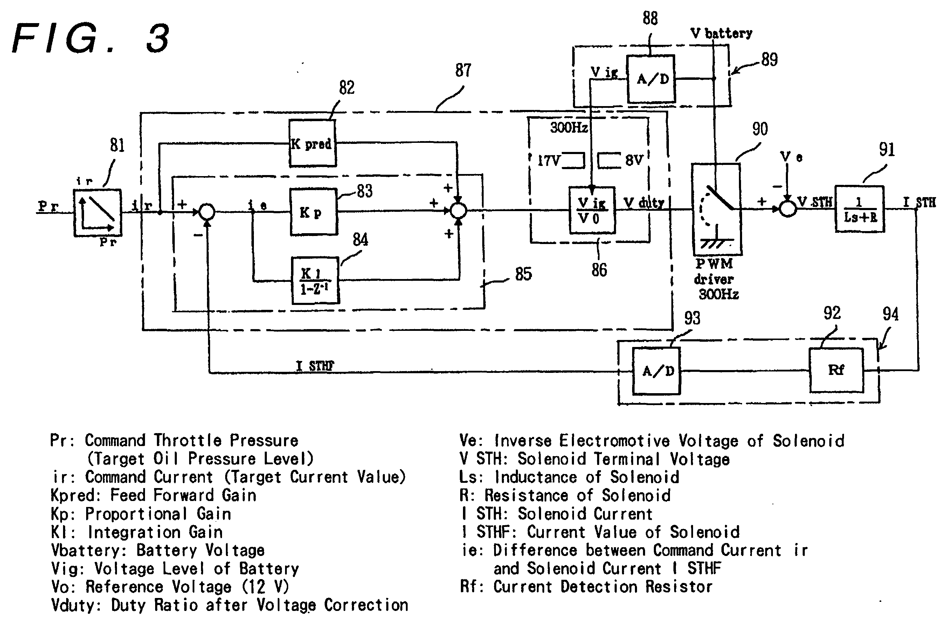

In Fig. 3, moreover: reference letters Pr designate a command throttle pressure (or target oil pressure level); letters ir a command current; letters Kpred a feed forward gain; letters Kp a proportional gain; letters KI an integration gain; letters Vbattery a battery voltage; letters Vig the voltage level of the battery; letters Vo a reference voltage (12 V); letters Vduty a duty ratio after the voltage correction; letters Ve an inverse electromotive voltage of the solenoid; V STH a solenoid terminal voltage; letters Ls an inductance of the solenoid; letter R a resistance of the solenoid; letters I STH a solenoid current; letters I STHF a current value of the solenoid; letters ie the difference between the command current ir and the current value I STHF of the solenoid; and letters Rf a current detection resistor. Moreover, characters S/D designate an analog/digital converter, and letters PWM driver designate a PWM driver.

Here: reference numeral 81 designates means for setting a linear solenoid current value corresponding to the command throttle pressure (as will be shortly called the "current value setting means"); numeral 82 feed forward setting means; and numeral 83 a proportional feedback correction unit for outputted a corrected duty ratio corresponding to the product, as calculated by multiplying the difference ie between the command current ir and the current value I STHF of the solenoid by the proportional gain Kp. Numeral 84 designates an integration feedback correction unit for integrating the difference ie to output a corrected duty ratio corresponding to the product, as calculated by multiplying the integrated difference by the integration gain KI.

Numeral 85 designates feedback correction means, as composed of the proportional feedback correction unit 83 and the integration feedback correction unit 84. Numeral 86 designates voltage correction means, and numeral 87 designates duty ratio setting means, as composed of the feedback correction means 85 and the voltage correction means 86. Numeral 89 designates voltage level detection means having an A/D converter 88 for detecting the battery voltage; numeral 90 power supply means composed of a PWM driver (300 Hz); numeral 91 a linear solenoid valve; and numeral 94 current value detection means composed of a current detection resistor 92 and an A/D converter 93.

Here will be described the operations.
(1) In accordance with the difference between the current value detected by the solenoid current monitor 10 or the current value detection means and the target current value set by the current value setting unit 4 or the current value setting means, the feedback correction unit 6 feedback-corrects the duty ratio so that the current value to be fed to the linear solenoid 12 may approach the target current value.
   On the basis of the current value of the battery, as detected by the IG voltage monitor 8 or the voltage level detection means, the voltage correction unit 7 or the voltage correction means further corrects the duty ratio which is corrected by the feedback correction unit 6.
   As a result, if there is a difference between the target current value and the current value at the linear solenoid 12, the duty ratio is so corrected by the feedback correction unit 6 that the current value to be fed to the linear solenoid valve 12 may approach the target current value. Thus, it is possible to achieve the target current value.
   Moreover, if an abrupt fluctuation occurs in the battery voltage, the duty ratio to be outputted to the solenoid driver 9 (corresponding to the power supply means 90 of Fig. 3) is corrected by the voltage correction unit 7 on the basis of the voltage level of the battery, as detected by the IG voltage monitor 8.
   As a result, the duty ratio is corrected before the power supply to the linear solenoid 12. Therefore, the duty ratio is corrected according to the voltage level of the battery before it is feedback-corrected so that the fluctuation of the current to be supplied to the linear solenoid 12 can be suppressed without any delay.
   As a result, even with a fluctuation of the battery voltage, the fluctuation of the current in the linear solenoid 12 can be suppressed to achieve an oil pressure level matching the stable target.
(2) Moreover, the voltage correction unit 7 corrects the duty ratio in accordance with the ratio (Vig/Vo) of the voltage level (Vig) of the battery, as detected by the IG voltage monitor 8, to the reference voltage (V0 = 12 V).
   As a result, it is possible to select a proper duty ratio promptly.
(3) Moreover, the IG voltage monitor 8 detects the battery voltage in synchronism with the predetermined period, for which the solenoid driver 9 feeds the battery voltage to the linear solenoid 12.
   Incidentally, a minute fluctuation of the voltage level of the battery may also be caused by the drive of the linear solenoid valve 23 itself. If a voltage absolutely independent of the period for the power supply to the linear solenoid 12 should be detected, the voltage level would change for each detection. In this case, although only the fluctuation of the voltage level due to the drive of a device such as a wiper would intrinsically like to be detected, the fluctuation due to the drive of the linear solenoid valve 23 itself is also detected to make the correct control impossible.
   In the present invention, the voltage of the battery can be detected in synchronism with the period of the solenoid driver 9 (or the power supply means 90). As shown in Fig. 5, for example, the fluctuating battery voltage V is detected in synchronism with the period (300 Hz) of the PWM signal.
   As a result, the voltage level can always be detected in the same state of the power supply to the linear solenoid 12 to eliminate the fluctuation of the voltage due to the power supply to the linear solenoid 12 so that an accurate control can be attained.
(4) Moreover, the voltage correction unit 7 does not correct the duty ratio when the voltage level of the battery, as detected by the IG voltage monitor 8, is outside of a predetermined range (< 8 V or > 17 V).
   In other words, when the detected battery voltage is abnormal, it is thought that the detection by the IG voltage monitor 8 is not accurate. As a result, an erroneous control is caused if the correction is performed in this case by the voltage.
   Therefore, in this case, i.e., outside the predetermined range lower than 8 V and higher than 17 V, not the correction but a masking is performed to prevent the erroneous control.
(5) Duty ratio setting means 3a has the feed forward setting unit 5 for setting the duty ratio according to the target current value, as set by the current value setting unit 4, and the feedback correction unit 6 corrects the duty ratio, as set by the feedback setting unit 5.

As a result, when the target oil pressure level is changed, the followability is not satisfactory. Therefore, this followability can be improved if the duty ratio according to the target current value is set by the feed forward setting unit 5 and is corrected by the feedback correction unit 6.

Here will be described a hydraulic circuit to which the linear solenoid 12 relates. This hydraulic circuit, as designated by 30, is equipped with: the linear solenoid valve 23 having the linear solenoid 12; a pump 36; a strainer 37; a primary regulator valve 52 having a main spool 52a, a sub-spool 52b, a plug 52c, a control chamber e, a feedback port f, a line pressure port p₂, a secondary regulator valve port h and a drain port EX; a throttle valve 53; a secondary regulator valve 55; a solenoid relay valve 58; a cutback valve 59; a solenoid regulator valve 73; and a pressure relief valve 75.

Thus, the primary regulator valve 52 is equipped with the control chamber e for regulating the line pressure in a lower direction and is made to communicate with the control pressure from the linear solenoid valve 23. On the basis of a signal from the (not-shown) sensor for detecting the select position of the (not-shown) manual valve, moreover, the linear solenoid valve 23 is control to feed the control pressure from the linear solenoid valve 23 to the control chamber e at the shifting time from a neutral range N to a drive range D or a reverse range R. When the lockup clutch is to be controlled by the linear solenoid valve 23, for example, the control pressure from the linear solenoid valve 23 is fed through the solenoid relay valve 58 to the control chamber e.

On the other hand, the primary regulator valve 52 is constructed such that a bias force, as based upon the throttle pressure or the like, is applied to one end of the main spool 52a whereas a feedback pressure from the line pressure port p₂ is applied to the other end and such that a control pressure from the linear solenoid valve 23 is applied to the step portion. Moreover, the primary regulator valve 52 is equipped with the line pressure port p₂, the drain port EX and the secondary regulator valve port h communicating with the secondary regulator valve 55.

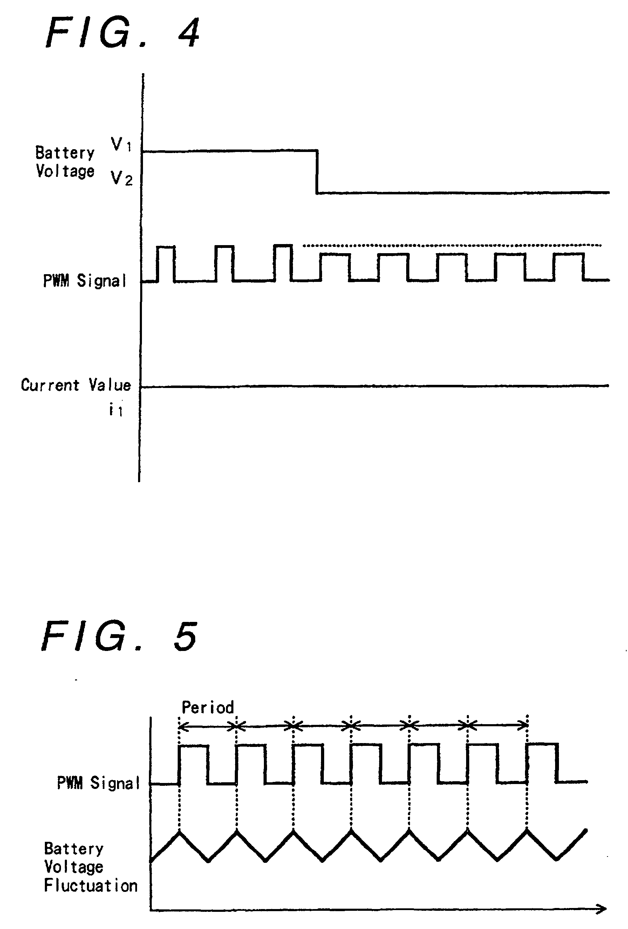

With the construction thus made, even if the battery voltage drops from V₁ to V₂, for example, as illustrated in Fig. 4, the duty ratio of the PWM signal is raised at the voltage correction unit 7 in instant response to the voltage drop so that a current value i to the linear solenoid 12 can be held constant.
(A) There are included: the feedback correction means (6) for feedback-correcting the duty ratio in accordance with the difference between the current value detected by the current value detection means (10) and the target current value set by the current value setting means (4), so that the current value to be fed to the linear solenoid may approach the target current value; and the voltage correction means (7) for further correcting the duty ratio, which is corrected by the feedback correction means (6), on the basis of the voltage level of the battery, as detected by the voltage level detection means (8). As a result, if there is a difference between the target current value and the current value at the linear solenoid (12), the duty ratio is so corrected by the feedback correction means (6) as to bring the current value to be fed to the linear solenoid (12) close to the target current value, so that the target current value can be attained.
   If an abrupt fluctuation occurs in the battery voltage, the duty ratio to be outputted to the power supply means (9) is corrected by the voltage correction means (7) on the basis of the voltage level of the battery, as detected by the voltage level detection means (8), so that the duty ratio is corrected before the power supply to the linear solenoid (12). As a result, the duty ratio is corrected according to the voltage level of the battery before it is feed-back-corrected, so that the fluctuation of the current to be fed to the linear solenoid (12) can be suppressed., In other words, even with a fluctuation of the battery voltage, the fluctuation of the current in the linear solenoid (12) can be suppressed to achieve a stable oil pressure value matching the target.
(B) In the control system for a linear solenoid valve according to the invention, the voltage correction means (7) corrects the duty ratio in accordance with the ratio (Vig/Vo) of the voltage level (Vig) of the battery, as detected by the voltage level detection means (8), to the reference voltage (Vo = 12 V). As a result, it is possible to select a proper duty ratio promptly.
(C) In the control system for a linear solenoid valve according to the invention, the voltage level detection means (8) detects the battery voltage in synchronism with the predetermined period for which the power supply means (9) supplies the battery voltage to the linear solenoid (12). A slight fluctuation of the voltage level of the battery is caused even by the drive of the linear solenoid valve (23) itself. As a result, the voltage level would change if the voltage should be detected completely independently of the period for the power supply to the linear solenoid (12). In this case, it is intrinsically desired to detect only the fluctuation of the voltage level, as caused by the drive of a device such as a wiper. However, the fluctuation due to the drive of the linear solenoid (12) itself is detected so that an accurate control cannot be effected.
   If, therefore, the voltage level of the battery is detected in synchronism with the period of the power supply means (9), it can always be detected when the state of the power supply to the linear solenoid (12) is identical. As a result, the fluctuation of the voltage due to the power supply to the linear solenoid (12) can be excluded to effect the accurate control.
(D) In the control system for a linear solenoid valve according to the invention, the voltage correction means (7) does not correct the duty ratio when the voltage level of the battery, as detected by the voltage level detection means (8), is outside of a predetermined range (< 8 V or > 17 V).
   Specifically, when the detected battery voltage is abnormal, it is thought that the detection by the voltage level detection means is not accurate. As a result, an erroneous control results if the correction . is made with the voltage. At this time, that is, outside of the predetermined range (< 8 V or > 17 V), not any correction but a masking can be executed to prevent the erroneous control.
(E) In the control system for a linear solenoid valve according to the invention, the duty ratio setting means (3a) further includes feed forward setting means (5) for setting the duty ratio according to the target current value set by the current value setting means (4), and in that the feedback correction means (6) corrects the duty ratio set by the feed forward setting means (5). As a result, when the target oil pressure level is changed, the followability is poor if the duty ratio is corrected by the feedback correction means (6) only. This followability can be improved if the duty ratio according to the target current value is set by the feed forward setting means (5) and corrected by the feedback correction means (6).

## Claims

1. A control system for a linear solenoid valve comprising: a linear solenoid valve (23) for outputting an oil pressure according to a current value to be fed to a linear solenoid (12); current value detection means (10) for detecting the current value fed to the linear solenoid of said linear solenoid valve; voltage level detection means (8) for detecting the voltage level of a battery; current value setting means (4) for setting a target current value according to a target oil pressure level; duty ratio setting means (3a) for setting a duty ratio to apply the battery voltage to said linear solenoid (12) on the basis of signals coming from said current value detection means (10), said voltage level detection means (8) and said current value setting means (4); and power supply means (9) for applying the battery voltage to said linear solenoid (12) with a predetermined cycle in accordance with the duty ratio set by said duty ratio setting means (3a),
wherein said duty ratio setting means (3a) includes: feedback correction means (6) for feedback-correcting the duty ratio in accordance with the difference between the current value detected by said current value detection means (10) and the target current value set by said current value setting means (4), so that the current value to be fed to said linear solenoid (12) may approach the target current value; and voltage correction means (7) for further correcting the duty ratio, which is corrected by said feedback correction means (6), on the basis of the voltage level of the battery, as detected by said voltage level detection means (8);
**characterized in that** said voltage level detection means (8) detects the battery voltage in synchronism with the predetermined cycle for which said power supply means (9) supplies the battery voltage to said linear solenoid (12).

2. A control system for a linear solenoid valve according to claim 1,
wherein said voltage correction means (7) corrects the duty ratio in accordance with the ratio (V_{ig}/Vₒ) of the voltage level of the battery, as detected by said voltage level detection means (8). to the reference voltage (Vₒ).

3. A control system for a linear solenoid valve according to claim 1 or 2,
wherein said voltage correction means (7) does not correct the duty ratio when the voltage level of the battery, as detected by said voltage level detection means (8), is outside of a predetermined range.

4. A control system for a linear solenoid valve according to any of claims 1 to 3,
wherein said duty ratio setting means (3a) further includes feed forward setting means (5) for setting the duty ratio according to the target current value set by said current value setting means (4), and
wherein said feedback correction means (6) corrects the duty ratio set by said feed forward setting means (5).

## Patentansprüche

1. Steuerungssystem für ein lineares Elektromagnetventil mit: einem linearen Elektromagnetventil (23) zum Ausgeben eines Öldrucks entsprechend einem einer linearen Magnetspule (12) zuzuführenden Stromwert; einer Stromwertermittlungseinrichtung (10) zum Ermitteln des der linearen Magnetspule des linearen Elektromagnetventils zugeführten Stromwerts; einer Spannungspegelermittlungseinrichtung (8) zum Ermitteln des Spannungspegels einer Batterie; einer Stromwertstelleinrichtung (4) zum Stellen eines Soll-Stromwertes entsprechend einer Soll-Öldruckhöhe; einer Tastverhältnisstelleinrichtung (3a) zum Stellen eines Tastverhältnisses, um die Batteriespannung an die lineare Magnetspule (12) auf der Grundlagen von Signalen anzulegen, die von der Stromwertermittlungseinrichtung (10), der Spannungspegelermittlungseinrichtung (8) und der Stromwertstelleinrichtung (4) kommen; und einer Stromzuführungseinrichtung (9) zum Anlegen der Batteriespannung an die lineare Magnetspule (12) mit einem vorbestimmten Zyklus entsprechend dem von der Tastverhältnisstelleinrichtung (3a) gestellten Tastverhältnis,
wobei die Tastverhältnisstelleinrichtung (3a) aufweist: eine Rückkopplungskorrektureinrichtung (6) zur Durchführung einer Rückkopplungskorrektur des Tastverhältnisses entsprechend der Differenz zwischen dem von der Stromwertermittlungseinrichtung (10) ermittelten Stromwert und dem von der Stromwertstelleinrichtung (4) gestellten Soll-Stromwert, so daß der der linearen Magnetspule (12) zuzuführende Stromwert sich dem Soll-Stromwert nähern kann; und einer Spannungskorrektureinrichtung (7) zum weiteren Korrigieren des von der Rückkopplungskorrektureinrichtung (6) korrigierten Tastverhältnisses auf der Grundlage des von der Spannungspegelermittlungseinrichtung (8) ermittelten Spannungspegels der Batterie;
**dadurch gekennzeichnet, daß** die Spannungspegelermittlungseinrichtung (8) die Batteriespannung synchron mit dem vorbestimmten Zyklus ermittelt, für den die Stromzuführungseinrichtung (9) die Batteriespannung der linearen Magnetspule (12) zuführt.

2. Steuerungssystem für ein lineares Elektromagnetventil nach Anspruch 1,
wobei die Spannungskorrektureinrichtung (7) das Tastverhältnis entsprechend dem Verhältnis (Vig/Vo) des von der Spannungspegelermittlungseinrichtung (8) ermittelten Spannungspegels der Batterie zur Referenzspannung (Vo) korrigiert.

3. Steuerungssystem für ein lineares Elektromagnetventil nach Anspruch 1 oder 2,
wobei die Spannungskorrektureinrichtung (7) das Tastverhältnis nicht korrigiert, wenn der von der Spannungspegelermittlungseinrichtung (8) ermittelte Spannungspegel der Batterie, außerhalb eines vorbestimmten Bereichs ist.

4. Steuerungssystem für ein lineares Elektromagnetventil nach einem der Ansprüche 1 bis 3,
wobei die Tastverhältnisstelleinrichtung (3a) ferner eine Vorwärtskopplungsstelleinrichtung (5) zum Stellen des Tastverhältnisses entsprechend dem von der Stromwertstelleinrichtung (4) gestellten Soll-Stromwert aufweist und
wobei die Rückkopplungskorrektureinrichtung (6) das von der Vorwärtskopplungsstelleinrichtung (5) gestellte Tastverhältnis korrigiert.

## Revendications

1. Système de commande pour une vanne électromagnétique linéaire comprenant : une vanne électromagnétique linéaire (23) pour délivrer une pression d'huile selon une valeur de courant à transmettre à une électrovanne linéaire (12); un moyen de détection (10) de valeur de courant pour détecter la valeur de courant transmise à l'électrovanne linéaire de ladite vanne électromagnétique linéaire; un moyen de détection (8) de niveau de tension pour détecter le niveau de tension d'une batterie; un moyen de réglage (4) de valeur de courant pour régler une valeur de courant cible en fonction d'un niveau de pression d'huile cible; un moyen de réglage (3a) de rapport cyclique pour régler un rapport cyclique pour appliquer la tension de batterie à ladite électrovanne linéaire (12) en se basant sur des signaux provenant dudit moyen de détection (10) de valeur de courant, dudit moyen de détection (8) de niveau de tension et dudit moyen de réglage (4) de valeur de courant; et un moyen formant alimentation électrique (9) pour appliquer la tension de batterie à ladite électrovanne linéaire (12) avec un cycle déterminé au préalable en fonction du rapport cyclique établi par ledit moyen de réglage (3a) de rapport cyclique,
dans lequel ledit moyen de réglage (3a) de rapport cyclique comporte : un moyen de correction par rétroaction (6) pour corriger par rétroaction le rapport cyclique en fonction de la différence entre la valeur de courant détectée par ledit moyen de détection (10) de valeur de courant et la valeur de courant cible établie par ledit moyen de réglage (4) de valeur de courant, de façon que la valeur de courant à transmettre à ladite électrovanne linéaire (12) puisse approcher la valeur de courant cible; et un moyen de correction de tension (7) pour corriger davantage le rapport cyclique, qui est corrigé par ledit moyen de correction par rétroaction (6), en se basant sur le niveau de tension de la batterie, tel que détecté par ledit moyen de détection (8) de niveau de tension;
**caractérisé en ce que** ledit moyen de détection (8) de niveau de tension détecte la tension de batterie en synchronisme avec le cycle déterminé au préalable pour lequel ledit moyen formant alimentation électrique (9) fournit la tension de batterie à ladite électrovanne linéaire (12).

2. Système de commande pour une vanne électromagnétique linéaire selon la revendication 1, dans lequel ledit moyen de correction de tension (7) corrige le rapport cyclique en fonction du rapport (V_{ig}/Vₒ) du niveau de tension de la batterie, tel que détecté par ledit moyen de détection (8) de niveau de tension, à la tension de référence (Vₒ).

3. Système de commande pour une vanne électromagnétique linéaire selon la revendication 1 ou 2, dans lequel ledit moyen de correction de tension (7) ne corrige pas le rapport cyclique lorsque le niveau de tension de la batterie, tel que détecté par ledit moyen de détection (8) de niveau de tension, est en dehors d'un intervalle déterminé au préalable.

4. Système de commande pour une vanne électromagnétique linéaire selon l'une quelconque des revendications 1 à 3,
dans lequel ledit moyen de réglage (3a) de rapport cyclique comporte en outre un moyen de réglage d'avance (5) pour régler le rapport cyclique selon la valeur de courant cible établie par ledit moyen de réglage (4) de valeur de courant, et
dans lequel ledit moyen de correction par rétroaction (6) corrige le rapport cyclique réglé par ledit moyen de réglage d'avance (5).
